# EUROPEAN PATENT SPECIFICATION

(11) **EP 3 893 133 B1**
(45) Date of publication and mention of the grant of the patent: **30.07.2025**
(21) Application number: 19906358.7
(22) Date of filing: 28.12.2019
(51) Int. Cl.: G06F 21/31, G06F 21/81, G06F 21/88

(54) **LOCKING METHOD AND RELATED ELECTRONIC DEVICE**
VERRIEGELUNGSVERFAHREN UND ZUGEHÖRIGE ELEKTRONISCHE VORRICHTUNG
PROCÉDÉ DE VERROUILLAGE ET DISPOSITIF ÉLECTRONIQUE CORRESPONDANT

(30) Priority: 29.12.2018 CN 201811654921
(43) Date of publication of application: 13.10.2021
(73) Proprietor: Huawei Technologies Co., Ltd., Shenzhen Guangdong 518129 (CN)
(72) Inventor: ZHOU, Zhensheng, Shenzhen, Guangdong 518129 (CN); SUN, Zengcai, Shenzhen, Guangdong 518129 (CN); LI, Yi, Shenzhen, Guangdong 518129 (CN); LI, Fengjun, Shenzhen, Guangdong 518129 (CN); WU, Jingdong, Shenzhen, Guangdong 518129 (CN)
(74) Representative: Goddar, Heinz J.
(86) International application number: PCT/CN2019/129639
(87) International publication number: WO 2020/135814

(56) References cited:
- WO-A1-2013/169268
- CN-A- 103 237 064
- CN-A- 106 851 623
- CN-A- 107 979 363
- CN-A- 109 948 310
- US-A1- 2009 089 887
- US-A1- 2014 057 597
- US-A1- 2014 372 743

## Description

### TECHNICAL FIELD

This application relates to the field of computer technologies, and in particular, to a locking method and a related electronic device.

### BACKGROUND

Currently, to prevent a lost electronic device such as a computer, and a mobile phone from being embezzled by others or leading to information leakage, a locking function is generally set in the electronic device. In current practical applications, after finding that his/her electronic device is lost, a user can log in to an electronic device management platform. After a user identity is authenticated by the electronic device management platform, the electronic device management platform sends a locking instruction to the electronic device, and the electronic device performs a locking operation after receiving the locking instruction sent from the electronic device management platform. However, in the prior art, locking of an electronic device depends on an operating system of the electronic device. If the thief performs a flashing operation after shutting down the lost electronic device, the electronic device cannot complete locking successfully, causing property loss to the user and user information leakage. How to safely lock an electronic device has become an urgent issue to be resolved by those skilled in the art.

US 2009/089887 A1 discloses: A manageability engine of a processor based device and a host theft-deterrence agent of the processor based device, jointly implement a theft-deterrence protocol with a theft-deterrence service, remotely disposed from the processor based device, to deter theft of the processor based device. The host theft-deterrence agent is configured to operate in a processor operated application execution environment of the processor based device, and the manageability engine is configured to operate outside the application execution environment.

### SUMMARY

Embodiments of this application provide a locking method and a related electronic device, to safely lock an electronic device.

According to a first aspect, an embodiment of this application provides a locking method. The method is applied to an electronic device, where the electronic device includes a processor and a locking control circuit, and the locking control circuit is capable of running when the electronic device is in a power-off state or a power-on state. The method includes: modifying, by the locking control circuit, a state flag to a first state flag when the electronic device needs to be locked, where the state flag is used to indicate a state of the electronic device, and the state includes whether the electronic device needs to be locked and whether the electronic device has already been locked; and the first state flag is used to indicate a state that the electronic device needs to be locked and is not locked; controlling, by the locking control circuit, the electronic device to restart; reading, by the processor, the state flag in a startup phase of the electronic device restart; and locking, by the processor, the electronic device when the processor determines that the state flag is the first state flag.

In the foregoing method, the locking control circuit modifies the state flag to the first state flag when the electronic device needs to be locked, and then controls the electronic device to restart; and the processor determines, based on the read first state flag in the startup phase of the electronic device, that the device needs to be locked and is not locked, and then performs a locking operation on the electronic device. Because the locking control circuit is capable of running when the electronic device is in a power-off state or a power-on state, locking of the electronic device does not depend on an operating system of the electronic device, so that the electronic device can be securely locked.

With reference to the first aspect, in a possible implementation, the state flag is stored in a secure element or the locking control circuit. In this manner, a thief is unable to change a locked state of the electronic device by damaging an operating system of the electronic device, improving security of the electronic device.

With reference to the first aspect, in a possible implementation, the startup phase is before startup of an operating system of the electronic device. In this manner, a thief is unable to unlock the electronic device by damaging the operating system of the electronic device, improving security of the electronic device.

With reference to the first aspect, in a possible implementation, if the electronic device is a computer, the startup phase is a basic input/output system BIOS startup phase; and if the electronic device is a mobile phone, the startup phase is a bootloader phase.

With reference to the first aspect, in a possible implementation, the state flag is stored in the locking control circuit, and the reading, by the processor, the state flag in a startup phase of the electronic device restart includes: sending, by the processor, indication information to the locking control circuit, where the indication information is used to instruct the locking control circuit to send the state flag to the processor; performing, by the locking control circuit, security authentication on the processor; and sending, by the locking control circuit, the state flag to the processor if the security authentication succeeds. In this manner, the state flag is stored, read, and modified by the locking control circuit, and security authentication on the processor is added in the reading process. This can prevent the state flag from being parsed or modified maliciously, improving locking safety.

With reference to the first aspect, in a possible implementation, the modifying, by the locking control circuit, a state flag to a first state flag when the electronic device needs to be locked includes: receiving, by the processor, a locking instruction from a server through a first application; and notifying, by the processor according to the locking instruction, the locking control circuit to modify the state flag to the first state flag.

With reference to the first aspect, in a possible implementation, the modifying, by the locking control circuit, a state flag to a first state flag when the electronic device needs to be locked includes: receiving, by the locking control circuit, a locking instruction from a server through the low power communication circuit; and modifying, by the locking control circuit, the state flag to the first state flag. In this manner, when the electronic device is in a power-off state or an offline state, the locking instruction sent from the server can be received through the low power communication circuit, avoiding a problem that the electronic device fails to receive the locking instruction in a power-off state or an offline state. Moreover, with a characteristic of low power consumption, the low power communication circuit does not consume too much power of the electronic device or affect normal use of the electronic device.

The modifying, by the locking control circuit, a state flag to a first state flag when the electronic device needs to be locked includes: modifying, by the locking control circuit, the state flag to the first state flag when it is detected that the electronic device is being disassembled. In this manner, the electronic device can be locked when a thief is disassembling the electronic device maliciously, preventing a locking failure due to disassembling of the locking control circuit by the thief, and improving security of the electronic device.

With reference to the first aspect, in a possible implementation, the modifying, by the locking control circuit, a state flag to a first state flag when the electronic device needs to be locked includes: modifying, by the locking control circuit, the state flag to the first state flag when it is detected that a power level of the electronic device falls below a first preset value. In this manner, a problem can be avoided that the electronic device fails to be restarted and locked after a thief uses up power of the electronic device maliciously, improving security of the electronic device.

With reference to the first aspect, in a possible implementation, the electronic device includes a low power communication circuit, and the method further includes: checking, by the low power communication circuit, whether the low power communication circuit is normally connected to a server according to a preset cycle, where the modifying, by the locking control circuit, a state flag to a first state flag when the electronic device needs to be locked includes: modifying, by the locking control circuit, the state flag to the first state flag when detecting that the electronic device fails to connect to the server within a preset time period through the low power communication circuit. In this manner, a problem can be avoided that the electronic device fails to receive the locking instruction after a thief masks a signal from the low power communication circuit of the electronic device, improving security of the electronic device.

With reference to the first aspect, in a possible implementation, the locking the electronic device includes: generating, by the processor, a locking password; using, by the processor, the locking password to lock the electronic device; and sending, by the processor, the locking password to the server.

With reference to the first aspect, in a possible implementation, the locking the electronic device includes: sending, by the processor, indication information to the server, where the indication information is used to instruct the server to generate a locking password; and receiving, by the processor, the locking password from the server and using the locking password to lock the electronic device.

With reference to the first aspect, in a possible implementation, the locking the electronic device includes: generating, by the processor, a first locking password; sending, by the processor, indication information to a server, where the indication information is used to instruct the server to generate a second locking password; receiving, by the processor, the second locking password from the server; using, by the processor, the first locking password and the second locking password to lock the electronic device; and sending, by the processor, the first locking password to the server. In this manner, the locking passwords of the electronic device are generated by the electronic device and the server jointly, improving password security.

With reference to the first aspect, in a possible implementation, the electronic device includes a hard disk, and the locking the electronic device includes: locking a main board of the electronic device, and locking the hard disk, where the locking password includes a main board locking password and a hard disk locking password, the main board locking password is used to lock the main board, the hard disk locking password is used to lock the hard disk, and the hard disk locking password is stored in the hard disk.

With reference to the first aspect, in a possible implementation, the method further includes: after the locking is complete, modifying, by the locking control circuit, the state flag to a second state flag, where the second state flag is used to indicate a state that the electronic device needs to be locked and is already locked.

With reference to the first aspect, in a possible implementation, the method further includes: when the processor determines in the startup phase that the state flag is the second state flag, pausing, by the processor, the startup, requesting user identity authentication, and continuing the startup after a user identity is authenticated.

With reference to the first aspect, in a possible implementation, the electronic device includes the low power communication circuit, and the method further includes: after the locking is complete, controlling, by the locking control circuit, the electronic device to power off, and sending a locking complete message to the server through the low power communication circuit.

With reference to the first aspect, in a possible implementation, the method further includes: receiving, by the processor, an unlocking credential sent from the server, where the unlocking credential is generated based on the locking password after the user identity authentication succeeds; matching, by the processor, the unlocking credential with the locking password; and if the match succeeds, clearing, by the processor, the locking password to complete the unlocking.

With reference to the first aspect, in a possible implementation, the method further includes: modifying, by the locking control circuit, the state flag to a third state flag after the electronic device is unlocked, where the third state flag is used to indicate a state that the electronic device does not need to be locked; and starting, by the processor, the electronic device normally.

With reference to the first aspect, in a possible implementation, the locking control circuit is one or more of an embedded controller EC, a microcontroller MCU, a digital signal processor, and a power management integrated circuit PMIC.

With reference to the first aspect, in a possible implementation, the low power communication circuit is one or more of a narrow band internet of things NB-IoT circuit, an enhanced machine type communication eMTC circuit, a long range radio LoRa circuit, a Sigfox circuit, a bluetooth low energy BLE circuit, a low power WIFI circuit, and a massive machine type communication mMTC circuit.

According to a second aspect, an embodiment of this application provides an electronic device, where the electronic device includes a processor and a locking control circuit, and the locking control circuit is capable of running when the electronic device is in a power-off state or a power-on state. The locking control circuit is configured to perform the following operations: modifying a state flag to a first state flag when the electronic device needs to be locked, where the state flag is used to indicate a state of the electronic device, the state includes whether the electronic device needs to be locked and whether the electronic device has already been locked, and the first state flag is used to indicate a state that the electronic device needs to be locked and is not locked; and controlling the electronic device to restart. The processor is configured to perform the following operations: reading the state flag in a startup phase of the electronic device restart; and locking the electronic device when the state flag is the first state flag.

In the foregoing electronic device, the locking control circuit modifies the state flag to the first state flag when the electronic device needs to be locked, and then controls the electronic device to restart; and in the startup phase of the electronic device, the processor determines, based on the read first state flag, that the device needs to be locked and is not locked, and then performs a locking operation on the electronic device. Because the locking control circuit is capable of running when the electronic device is in a power-off state or a power-on state, locking of the electronic device does not depend on an operating system of the electronic device, so that secure locking can be performed.

With reference to the second aspect, in a possible implementation, the state flag is stored in a secure element or the locking control circuit. In this manner, a thief is unable to change a locked state of the electronic device by damaging an operating system of the electronic device, improving security of the electronic device.

With reference to the second aspect, in a possible implementation, the startup phase is before startup of an operating system of the electronic device. In this manner, a thief is unable to unlock the electronic device by damaging the operating system of the electronic device, improving security of the electronic device.

With reference to the second aspect, in a possible implementation, if the electronic device is a computer, the startup phase is a basic input/output system BIOS startup phase; and if the electronic device is a mobile phone, the startup phase is a bootloader phase.

With reference to the second aspect, in a possible implementation, the state flag is stored in the locking control circuit, and the processor is further configured to send indication information to the locking control circuit, where the indication information is used to instruct the locking control circuit to send the state flag to the processor; and the locking control circuit is further configured to: perform security authentication on the processor; and send the state flag to the processor when the security authentication succeeds. In this manner, the state flag is stored, read, and modified by the locking control circuit, and security authentication on the processor is added in the reading process, which can prevent the state flag from being parsed or modified maliciously, and improve locking security.

With reference to the second aspect, in a possible implementation, the processor is further configured to: receive a locking instruction from a server through a first application; and notify, according to the locking instruction, the locking control circuit to modify the state flag to the first state flag.

The electronic device includes a low power communication circuit, and the locking control circuit is further configured to: receive a locking instruction from a server through the low power communication circuit; and modify the state flag to the first state flag. In this manner, when the electronic device is in a power-off state or an offline state, the locking instruction sent from the server can be received through the low power communication circuit, avoiding a problem that the electronic device fails to receive the locking instruction in a power-off state or an offline state. Moreover, with a characteristic of low power consumption, the low power communication circuit does not consume too much power of the electronic device or affect normal use of the electronic device.

With reference to the second aspect, in a possible implementation, the locking control circuit is further configured to modify the state flag to the first state flag when it is detected that the electronic device is being disassembled. In this manner, the electronic device can be locked when a thief is disassembling the electronic device maliciously, preventing a locking failure due to disassembling of the locking control circuit by the thief, and improving security of the electronic device.

With reference to the second aspect, in a possible implementation, the locking control circuit is further configured to: modify the state flag to the first state flag when it is detected that a power level of the electronic device falls below a first preset value. In this manner, a problem can be avoided that the electronic device fails to be restarted and locked after a thief uses up power of the electronic device maliciously, improving security of the electronic device.

With reference to the second aspect, in a possible implementation, the electronic device includes a low power communication circuit. The low power communication circuit is configured to check, according to a preset cycle, whether the low power communication circuit is normally connected to a server; and the locking control circuit is further configured to: modify the state flag to the first state flag when it is detected that the electronic device fails to connect to the server within a preset time period through the low power communication circuit. In this manner, a problem can be avoided that the electronic device fails to receive the locking instruction after a thief masks a signal from the low power communication circuit of the electronic device, improving security of the electronic device.

With reference to the second aspect, in a possible implementation, the processor is specifically configured to: generate a locking password; use the locking password to lock the electronic device; and send the locking password to the server.

With reference to the second aspect, in a possible implementation, the processor is specifically configured to: send indication information to the server, where the indication information is used to instruct the server to generate a locking password; and receive the locking password from the server, and use the locking password to lock the electronic device.

With reference to the second aspect, in a possible implementation, the processor is specifically configured to generate a first locking password; send indication information to the server, where the indication information is used to instruct the server to generate a second locking password; receive the second locking password from the server; use the first locking password and the second locking password to lock the electronic device; and send the first locking password to the server. In this manner, the locking passwords of the electronic device are generated by the electronic device and the server jointly, improving password security.

With reference to the second aspect, in a possible implementation, the electronic device includes a hard disk, and the processor is further configured to: lock a main board of the electronic device, and lock the hard disk, where the locking password includes a main board locking password and a hard disk locking password, the main board locking password is used to lock the main board, the hard disk locking password is used to lock the hard disk, and the hard disk locking password is stored in the hard disk.

With reference to the second aspect, in a possible implementation, the locking control circuit is further configured to: after the locking is complete, modify the state flag to a second state flag, where the second state flag is used to indicate a state that the electronic device needs to be locked and is already locked.

With reference to the second aspect, in a possible implementation, the processor is further configured to: when it is determined in the startup phase that the state flag is the second state flag, pause the startup, request user identity authentication, and continue the startup after a user identity is authenticated.

With reference to the second aspect, in a possible implementation, the electronic device includes the low power communication circuit, and the locking control circuit is further configured to: after the locking is complete, control the electronic device to power off, and send a locking complete message to the server through the low power communication circuit.

With reference to the second aspect, in a possible implementation, the processor is further configured to: receive an unlocking credential sent from the server, where the unlocking credential is generated based on the locking password after the user identity authentication succeeds; match the unlocking credential with the locking password; and if the match succeeds, clear the locking password to complete unlocking.

With reference to the second aspect, in a possible implementation, the locking control circuit is further configured to: modify the state flag to a third state flag after the electronic device completes the unlocking, where the third state flag is used to indicate a state that the electronic device does not need to be locked; and the processor is further configured to start the electronic device normally.

With reference to the second aspect, in a possible implementation, the locking control circuit is one or more of an embedded controller EC, a microcontroller MCU, a digital signal processor, and a power management integrated circuit PMIC.

With reference to the second aspect, in a possible implementation, the low power communication circuit is one or more of a narrow band internet of things NB-IoT circuit, an enhanced machine type communication eMTC circuit, a long range radio LoRa circuit, a Sigfox circuit, a bluetooth low energy BLE circuit, a low power WIFI circuit, and a massive machine type communication mMTC circuit.

In the embodiments of this application, the locking control circuit modifies the state flag to the first state flag when the electronic device needs to be locked, and then controls the electronic device to restart; and in the startup phase of the electronic device, the processor determines, based on the read first state flag, that the device needs to be locked and is not locked, and then performs a locking operation on the electronic device. Because the locking control circuit is capable of running when the electronic device is in a power-off state or a power-on state, locking of the electronic device does not depend on an operating system of the electronic device, so that the electronic device can be securely locked.

### BRIEF DESCRIPTION OF DRAWINGS

To describe the technical solutions in the embodiments of this application or in the prior art more clearly, the following briefly describes the accompanying drawings for describing the embodiments or the prior art.
FIG. 1 is a schematic diagram of a locking system architecture according to an embodiment of this application;
FIG. 2 is a schematic architectural diagram of an electronic device according to an embodiment of this application;
FIG. 3 is a flowchart of a locking method according to an embodiment of this application;
FIG. 4 is a schematic diagram of a scenario in which locking is triggered according to an embodiment of this application;
FIG. 5 is a schematic diagram of another scenario in which locking is triggered according to an embodiment of this application;
FIG. 6 is a schematic diagram of another scenario in which locking is triggered according to an embodiment of this application;
FIG. 7 is a schematic diagram of another scenario in which locking is triggered according to an embodiment of this application;
FIG. 8 is a schematic diagram of another scenario in which locking is triggered according to an embodiment of this application;
FIG. 9 is a flowchart of an unlocking method according to an embodiment of this application; and
FIG. 10 is a schematic diagram of another electronic device according to an embodiment of this application.

### DESCRIPTION OF EMBODIMENTS

The following describes technical solutions in the embodiments of this application in more detail.

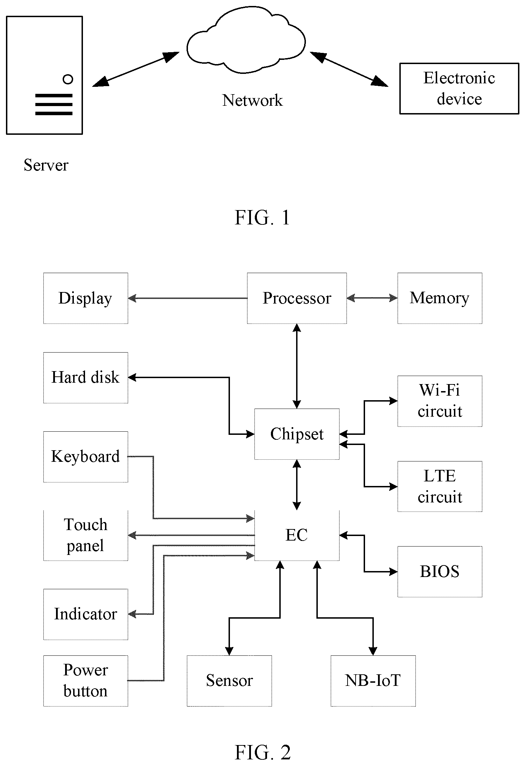

FIG. 1 is a schematic diagram of a locking system architecture according to an embodiment of this application. The system includes an electronic device and a server, and the electronic device can communicate with the server through a network. The following specifically describes the foregoing electronic device.

The electronic device is an electronic device that can provide a variety of application functions for a user, such as a mobile phone, a tablet computer, and a notebook computer. The electronic device can communicate with a server through a mobile communications technology, for example, a second generation mobile communications technology (2G), a third generation mobile communications technology (3G), a fourth generation mobile communications technology (4G), or a fifth generation mobile communications technology (5G), and can also communicate with the server through a wireless local area network (wireless local area network, WLAN). Specifically, the electronic device includes a locking control circuit, and the locking control circuit is capable of running when the electronic device is in a power-off state or a power-on state.

The server is a server that is configured to lock and unlock an electronic device. After user identity authentication succeeds, the server can perform a locking operation on an electronic device, or can perform an unlocking operation on a locked electronic device.

FIG. 2 is a schematic structural diagram of an electronic device according to an embodiment of this application. The following describes components of the electronic device shown in the figure. As shown in FIG. 2, the electronic device includes a processor, an EC, a BIOS, an NB-IoT, a display, a memory, a hard disk, a chipset, a Wi-Fi circuit, an LTE circuit, a keyboard, a touch panel, an indicator, a power button, and a sensor. A person skilled in the art can understand that the electronic device shown in FIG. 2 is merely an example according to an embodiment of the present invention, a structure of the electronic device shown in FIG. 2 constitutes no limitation on the electronic device, and the electronic device may include components more or fewer than those shown in the figure, combine some components, or split some components, or arrange the components differently.

The processor (central processing unit, CPU) is a very large scale integrated circuit, and is the computing core (core) and control core (control unit) of the electronic device. The processor can parse a program instruction, process data, and perform operations. In this embodiment of this application, the processor can read a state flag in a startup phase of the electronic device restart; and lock the electronic device when determining that the state flag is a first state flag. Optionally, after user identity authentication succeeds, the processor may further complete an unlocking operation on the electronic device.

The embedded controller (embedded controller, EC) is a locking control circuit in this application. The locking control circuit in this application may alternatively be a micro controller (micro controller unit, MCU), a digital signal processor, a power management integrated circuit (power management integrated circuit, PMIC), or the like. In FIG. 2, an example in which the locking control circuit is an EC is used. The EC is capable of running when the electronic device is in a power-off state or a power-on state. A power supply of the electronic device provides power to the EC separately. The power-off herein means that some devices of the electronic device (such as the processor, the hard disk, the display, and the chipsets) with high power consumption are powered off, but the EC remains powered on, and therefore can continue to work. The EC may be configured to set a state flag of the electronic device, and may also control shutdown and startup of the electronic device. When the electronic device needs to be locked, the EC modifies the state flag to the first state flag, and controls the electronic device to restart. The first state flag is used to indicate a state that the electronic device needs to be locked and is not locked.

The basic input/output system (basic input output system, BIOS) is the first software loaded when a computer starts up, and stores the most important basic input/output program of the computer, a startup self-test program, and a system self-boot program. A main function of the basic input/output system is to provide underlying and most direct hardware setting and control for the computer. If the electronic device is a computer, the electronic device includes a BIOS. The processor can specifically read the state flag in a BIOS startup phase, and lock the electronic device when determining that the state flag is the first state flag. Optionally, if the electronic device is a mobile phone, the BIOS can be replaced by a bootloader. The processor can specifically read the state flag in a bootloader startup phase, and lock the electronic device when determining that the state flag is the first state flag.

Optionally, the BIOS startup phase is different from a normal startup in the prior art. In the startup phase, only drivers necessary for a processor, a bridge chip, and a hard disk are run, and no initialization processing is performed on other software or drivers. For example, in the BIOS startup phase, no initialization processing is performed on software (such as chatting software and document processing software) that is set to auto start by a user. In the BIOS startup phase, no initialization processing is performed on drivers such as a sound card driver, a network card driver, and a universal serial bus (universal serial bus, USB) driver. The same principles apply to the bootloader startup phase.

Narrow band internet of things (narrow band internet of things, NB-IoT) is an emerging technology in the field of internet of things, and supports low power devices in the wide area network cellular data connection, also known as a low power wide area network. The NB-IoT supports efficient connection of devices with long standby time and high network connection requirements. An NB-IoT circuit is a low power communication circuit in this application. The low power communication circuit in this application may alternatively be one or more of an enhanced machine type communication (enhanced machine type communication, eMTC) circuit, a long range radio (long range radio, LoRa) circuit, a Sigfox circuit, a bluetooth low energy (bluetooth low energy, BLE) circuit, a low power wireless network (low power WIFI) circuit, and a massive machine type communication (massive machine type communication, mMTC) circuit. In FIG. 2, an example in which the locking control circuit is an NB-IoT circuit is used. When the electronic device fails to communicate with a server through a mobile communications technology and a wireless local area network, the electronic device can communicate with the server through NB-IoT. Specifically, a power supply of the electronic device separately powers the NB-IoT, so that the NB-IoT is capable of running when the electronic device is in a power-off state or a power-on state.

The display is an output device of the electronic device, and is a displaying tool that displays data on a screen and reflects the data to human eyes. The processor can control the display to display data. The display may be configured to display information input by a user, information provided for the user, and various menus of the electronic device.

The memory (memory) is one of important components in the electronic device, and is a bridge for communication with the processor. The memory, also known as internal storage, is configured to temporarily store computing data in the processor and exchange data with external storage such as a hard disk. The processor fetches to-be-computed data into the memory for computation as long as the electronic device is running, and the electronic device transfers a result after the computation is complete. The memory may include components such as a memory chip, a circuit board, and an edge connector.

The hard disk is configured to store data for the electronic device, and the hard disk may be a mechanical hard disk, a solid state hard disk, or another type of hard disk. Optionally, when determining that the state flag is the first state flag, the processor may specifically lock a main board of the electronic device by using a main board locking password, and lock the hard disk by using a hard disk locking password. The hard disk locking password may be stored in the hard disk. Optionally, the hard disk locking password may be stored in a hard disk controller of the hard disk. A manner of locking the hard disk is first controlling the hard disk to power off so that the hard disk exits from a not-locked state; and then controlling the hard disk to power on, and using the hard disk locking password to lock the hard disk. Specifically, once locked, the hard disk can remain in a locked state if powered on or powered off again.

The chipset (chipset), a core component of the main board, is a bridge for the processor to communicate with peripheral devices. It is a collective term for a "south bridge chip" and a "north bridge chip".

The Wi-Fi circuit and the LTE circuit are configured to communicate with the server. When the electronic device fails to communicate with the server through the Wi-Fi circuit and the LTE circuit, the electronic device can communicate with the server through NB-IoT.

The keyboard and the touch panel are input devices of the electronic device, and a user can input information to the electronic device through the keyboard and the touch panel. For example, the user can input user identity information by using the keyboard or the touch panel to perform authentication on the user identity; and the processor sends the identity information to the server. The identity information is used by the server to authenticate the user identity.

The indicator may be used to indicate information. For example, when receiving new information, the electronic device can make the indicator flash to indicate that new information is received.

The power button is used to start the power supply. The power supply is configured to provide power for the electronic device. Specifically, the power supply of the electronic device separately powers the NB-IoT and the EC. When the electronic device is powered off, the power supply remains supplying power to the NB-IoT and the EC. Therefore, the NB-IoT and the EC are capable of running when the electronic device is in a power-off state or a power-on state. The power supply supplies power to other components in the electronic device according to a normal power supplying manner. For example, when the electronic device is powered off, the power supply cuts off the power to the components other than the NB-IoT and the EC. Therefore, when the electronic device is in a power-off state, the components other than the NB-IoT and the EC cannot run.

The sensor can be a light sensor, a motion sensor, or another type of sensor.

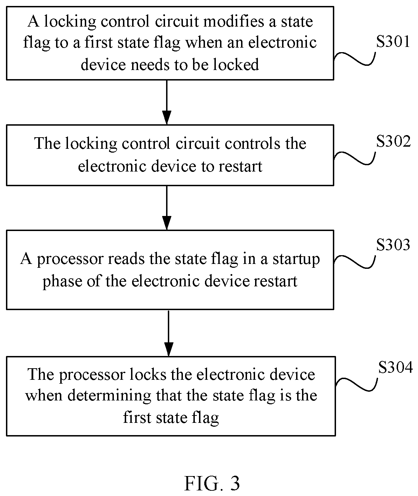

FIG. 3 is a flowchart of a locking method according to an embodiment of this application. The method can be implemented based on the architecture shown in FIG. 1. An electronic device described below may be the electronic device in the system architecture shown in FIG. 1. For the architecture of the electronic device, reference may be made to the architecture shown in FIG. 2. The method includes but is not limited to the following steps.

S301. A locking control circuit modifies a state flag to a first state flag when the electronic device needs to be locked.

The state flag is used to indicate a state of the electronic device, and the state includes whether the electronic device needs to be locked and whether the electronic device has already been locked. Specifically, the state flag may be various data structures. For example, the state flag may be numerical, and specifically, may be a number or a string of numbers, such as 1, 10, or 100. The state flag may also be alphabetical, and specifically, may be a letter or a string of letters, such as Y, AA, or BCD. The state flag may also be symbolic, and specifically, may be a symbol or a sequence of symbols, such as "∘", "□□", or "△∘". Optionally, the state flag may also contain a server signature that can be used to verify the validity of the state flag. In addition, in this application, the state flag may be one or more data structures used to indicate one or more states. These data structures may be stored in one or more memories, or stored in different portions of one memory. For example, when the state flag needs to represent a plurality of states, they may be represented by using one data structure (for example, using "1" to represent a state that the electronic device needs to be locked and is not locked), or may be represented by a plurality of data structures (for example, using one data structure "2" to represent that the electronic device needs to be locked, and another data structure "b" to represent that the electronic device is not locked).

It should be noted that the state flag may include three possible cases: the first state flag, a second state flag, and a third state flag. These three state flags are flags different from each other in both content and represented meaning. The first state flag is used to indicate a state that the electronic device needs to be locked and is not locked; the second state flag is used to indicate a state that the electronic device needs to be locked and is already locked; and the third state flag is used to indicate a state that the electronic device does not need to be locked.

Table 1 shows a possible case of state flags. The state flag is composed of two digits. The first digit is used to indicate whether the electronic device needs to be locked. When the first digit is 1, it indicates that the electronic device needs to be locked; and when the first digit is 0, it indicates that the electronic device does not need to be locked. The second digit is used to indicate whether the electronic device has already been locked. When the first digit is 0, it indicates that the electronic device has not been locked; and when the first digit is 1, it indicates that the electronic device has been locked.

**Table 1**

| State flag | Content | Represented meaning |
|---|---|---|
| First state flag | 10 | An electronic device needs to be locked, and is not locked. |
| Second state flag | 11 | An electronic device needs to be locked, and is already locked. |
| Third state flag | 00 | The electronic device does not need to be locked. |

Specifically, the state flag is stored in a secure element or the locking control circuit. The secure element may be integrated in the locking control circuit, or may be a standalone apparatus. The locking control circuit can modify the state flag in the secure element.

The locking control circuit is capable of running when the electronic device is in a power-off state or a power-on state. The power supply of the electronic device provides power to the locking control circuit separately. The power-off herein means that some devices of the electronic device (such as the processor, the hard disk, the display, and the chipsets) with high power consumption are powered off, but the locking control circuit remains powered on, and therefore can continue to work. When the electronic device is in a power-on state or a power-off state, the locking control circuit remains powered on. Therefore, the locking control circuit is capable of running when the electronic device is in a power-off state or a power-on state. For example, the locking control circuit may be one or more of an embedded controller (embedded controller, EC), a micro controller (micro controller unit, MCU), a digital signal processor, and a power management integrated circuit (power management integrated circuit, PMIC). In this manner, a thief is unable to change a locked state of the electronic device by damaging an operating system of the electronic device, improving security of the electronic device.

The locking control circuit modifies a state flag to a first state flag when the electronic device needs to be locked. There may be a plurality of cases in which the electronic device needs to be locked. The following describes a plurality of cases in which the locking control circuit modifies a state flag to a first state flag when the electronic device needs to be locked.

Case 1: The processor receives a locking instruction from a server through a first application; and the processor notifies, according to the locking instruction, the locking control circuit to modify the state flag to the first state flag.

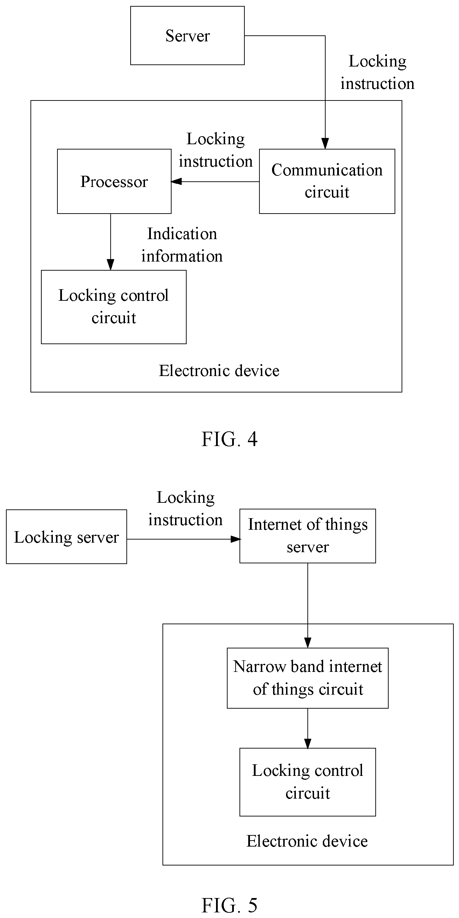

The first application may be an anti-theft management application, such as a computer manager, a security guard, or anti-theft software. FIG. 4 is a schematic diagram of a scenario in which locking is triggered according to an embodiment of this application. An arrow direction in the figure indicates a transmission direction of a locking instruction. If a user wants to lock a lost electronic device, the user can authenticate an identity of the user in the server. After the user identity authentication succeeds, the server sends a locking instruction to the electronic device. If the electronic device is in a power-on and online state, the processor can receive the locking instruction from the server through the first application, and then the processor notifies, according to the locking instruction, the locking control circuit to modify the state flag to the first state flag. The electronic device in an online state means that the electronic device can communicate with the server through a mobile communications technology or a wireless local area network. Specifically, a communication circuit is configured to implement a function of communication with the server through the mobile communications technology or the wireless local area network. A manner in which the processor notifies the locking control circuit may be: sending indication information to the locking control circuit, where the indication information is used to instruct the locking control circuit to modify the state flag to the first state flag; and modifying, by the locking control circuit, the state flag to the first state flag according to the indication information.

Case 2: The electronic device includes a low power communication circuit, and the processor receives a locking instruction from the server through the low power communication circuit; the locking control circuit receives the locking instruction from the server through the low power communication circuit; and the locking control circuit modifies the state flag to the first state flag. The low power communication circuit is one or more of a narrow band internet of things (narrow band Internet of things, NB-IoT) circuit, an enhanced machine type communication (enhanced machine type communication, eMTC) circuit, a long range radio (Long Range, LoRa) circuit, a Sigfox circuit, a bluetooth low energy (bluetooth low energy, BLE) circuit, a low power wireless network (low power WIFI) circuit, and a massive machine type communication (massive machine type of communication, mMTC) circuit. When the electronic device fails to communicate with the server through the mobile communications technology and the wireless local area network, the electronic device can communicate with the server through the low power communication circuit. Specifically, the power supply of the electronic device separately powers the low power communication circuit, so that the low power communication circuit is capable of running when the electronic device is in a power-off state or a power-on state. In this manner, when the electronic device is in a power-off state or an offline state, the locking instruction sent from the server can be received through the low power communication circuit, avoiding a problem that the electronic device fails to receive the locking instruction in a power-off state or an offline state. Moreover, with a characteristic of low power consumption, the low power communication circuit does not consume too much power of the electronic device or affect normal use of the electronic device.

FIG. 5 is a schematic diagram of another scenario in which locking is triggered according to an embodiment of this application. An arrow direction in the figure indicates a transmission direction of a locking instruction. Taking that the low power communication circuit is a narrow band Internet of Things circuit for example, the internet of things server can communicate with the narrow band internet of things circuit, and can communicate with a locking server. If a user wants to lock a lost electronic device, the user can authenticate an identity of the user in the locking server (the locking server has the same functions as the server shown in FIG. 1). When the user identity authentication succeeds, the locking server sends a locking instruction to the internet of things server. The internet of things server then sends the locking instruction to the narrow band internet of things circuit, and the narrow band internet of things circuit sends the locking instruction to the locking control circuit. After receiving the locking instruction, the locking control circuit modifies the state flag to the first state flag. In a possible case, the internet of things server and the locking server may be the same server. This is not limited herein.

Case 3: When it is detected that the electronic device is being disassembled, the locking control circuit modifies the state flag to the first state flag.

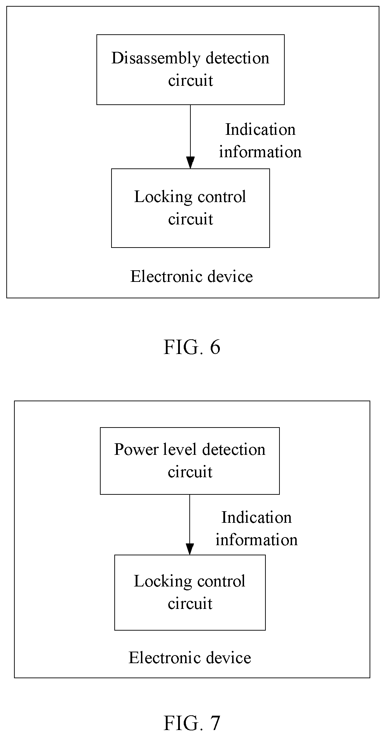

Optionally, the electronic device may include a disassembly detection circuit, and the disassembly detection circuit can detect whether the electronic device is being disassembled. FIG. 6 is a schematic diagram of another scenario in which locking is triggered according to an embodiment of this application. When the disassembly detection circuit detects that the electronic device is being disassembled, the disassembly detection circuit sends indication information to the locking control circuit, where the indication information is used to indicate that the electronic device is being disassembled. After the locking control circuit receives the indication information, the locking control circuit modifies the state flag to the first state flag. In a possible implementation, the disassembly detection circuit is integrated in the locking control circuit. In this implementation, when the locking control circuit detects that the electronic device is being disassembled, the locking control circuit modifies the state flag to the first state flag. In this manner, the electronic device can be locked when a thief is disassembling the electronic device maliciously, preventing a locking failure due to disassembling of the locking control circuit by the thief, and improving security of the electronic device.

Case 4: When it is detected that a power level of the electronic device falls below a first preset value, the locking control circuit modifies the state flag to the first state flag.

Optionally, the electronic device may include a power level detection circuit. FIG. 7 is a schematic diagram of another scenario in which locking is triggered according to an embodiment of this application. The power level detection circuit can detect whether the power level of the electronic device falls below the first preset power level. When the power level detection circuit detects that the power level of the electronic device falls below the first preset power level, the power level detection circuit sends indication information to the locking control circuit, where the indication information is used to indicate that the power level of the electronic device falls below the first preset power level. After the locking control circuit receives the indication information, the locking control circuit modifies the state flag to the first state flag. In a possible implementation, the power level detection circuit may be integrated in the locking control circuit. In this implementation, when the locking control circuit detects that the power of the electronic device falls below the first preset power level, the locking control circuit modifies the state flag to the first state flag.

In this manner, a problem can be avoided that the electronic device fails to be restarted and locked after a thief uses up power of the electronic device maliciously, improving security of the electronic device.

Case 5: The electronic device includes a low power communication circuit. The low power communication circuit has the same functions as the low power communication circuit described above, and details are not described herein again. The method further includes: checking, by the low power communication circuit according to a preset cycle, whether the low power communication circuit is normally connected to a server. The preset cycle may be set manually, such as 30 seconds, 1 minute, or 5 minutes. A preset time period may be set manually, such as 1 minute, 3 minutes, 5 minutes, or 10 minutes. The locking control circuit modifies the state flag to the first state flag when it is detected that the electronic device fails to connect to the server within a preset time period through the low power communication circuit. In this manner, a problem can be avoided that the electronic device fails to receive a locking instruction after a thief masks a signal from the low power communication circuit of the electronic device, improving security of the electronic device.

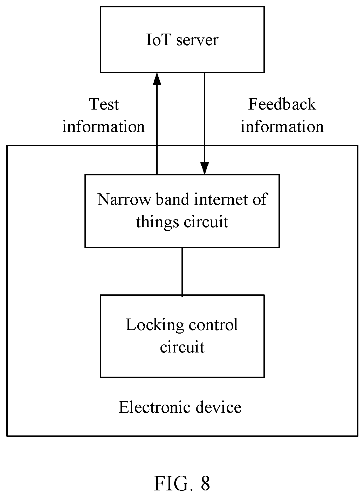

FIG. 8 is a schematic diagram of another scenario in which locking is triggered according to an embodiment of this application. Taking that the low power communication circuit is a narrow band internet of things circuit as an example, the narrow band internet of things circuit sends test information to an internet of things server according to a preset cycle, where the test information is used to detect whether the narrow band internet of things circuit is normally connected to the server. If the test information is received successfully, the internet of things server sends feedback information to the narrow band internet of things circuit. For example, the preset cycle is 1 minute, and the preset time period is 3 minutes. If it is detected that the electronic device receives no feedback information within 3 minutes, it indicates that a quantity of times that the electronic device fails to connect to the server through the low power communication circuit within a preset time period is greater than a second preset value. In this case, the locking control circuit modifies the state flag to the first state flag. In a possible case, the internet of things server and the server shown in FIG. 1 are the same server.

S302. The locking control circuit controls the electronic device to restart.

Specifically, the locking control circuit controls the electronic device to restart, which means the locking control circuit controls the electronic device to power on again. If the electronic device is originally in a power-off state, the locking control circuit controls the electronic device to power on; and if the electronic device originally is in a power-on state, the locking control circuit controls the electronic device to power off and then power on again.

Optionally, if the electronic device includes a hard disk, the locking control circuit controls the hard disk to perform an operation of powering off and then powering on again, where the power-off operation makes the hard disk exit from a not-locked state, and the processor locks the hard disk in the power-on process.

S303. The processor reads the state flag in a startup phase of the electronic device restart.

The startup phase is before startup of an operating system of the electronic device. Unlike a normal startup in the prior art, in the startup phase, only drivers necessary for a processor, a bridge chip, and a hard disk are run, and no initialization processing is performed on other software (such as software (chatting software, document processing software, and so on) that is set to auto start by a user) or drivers (such as a sound card driver, a network card driver, and a universal serial bus (universal serial bus, USB) driver).

For example, if the electronic device is a computer, the startup phase may be a basic input/output system BIOS startup phase; if the electronic device is a mobile phone, the startup phase may be a bootloader phase. Specifically, a BIOS is the first software loaded when a computer starts up, and stores the most important basic input/output program of the computer, a startup self-test program, and a system self-start program. A main function of the BIOS is to provide underlying and most direct hardware setting and control for the computer. Bootloader is the first segment of code that is run when the mobile phone is powered on, and before a kernel of an operating system runs, can initialize hardware devices and establish memory space mapping. The state flag is read in the above startup phase, so that the reading of the state flag does not depend on the operating system of the electronic device, and a locking failure resulted from a malicious damage of the operating system of the electronic device can be prevented. Moreover, because no software initialization is required in the startup phase, a time for performing locking can be reduced, improving locking efficiency.

Optionally, if the state flag is stored in the locking control circuit, the processor reads the state flag in the startup phase of the electronic device restart in the following manner: The processor sends indication information to the locking control circuit, where the indication information is used to instruct the locking control circuit to send the state flag to the processor; the locking control circuit performs security authentication on the processor; and if the security authentication succeeds, the locking control circuit sends the state flag to the processor. Optionally, if the security authentication fails, the locking control circuit instructs the processor to lock the electronic device. In this manner, the state flag is stored, read, and modified by the locking control circuit, and security authentication on the processor is added in the reading process, which can prevent the state flag from being parsed or modified maliciously, and improve locking security.

Optionally, if the state flag is stored in a secure element, the processor reads the state flag in the startup phase of the electronic device restart in the following manner: The processor sends an access request to the secure element; the secure element performs security authentication on the processor based on the access request; and if the security authentication succeeds, the secure element allows the processor to access the state flag stored in the secure element. Specifically, the state flag in the secure element can be modified only by the locking control circuit, and cannot be modified by the processor, and the state flag in the secure element is not lost in case of power-down. In this manner, the state flag is stored in the secure element. Because the secure element has an encryption/decryption logic circuit in its chip, and data stored by the secure element cannot be modified by the processor, the state flag can be prevented from being maliciously parsed or modified, improving locking security.

S304. The processor locks the electronic device when determining that the state flag is the first state flag.

The first state flag indicates that the electronic device needs to be locked and the electronic device is not locked. In this case, the processor performs a locking operation on the electronic device. Specifically, the electronic device may be locked in various manners. The following describes some possible manners in which the electronic device is locked.

Manner 1: The electronic device generates a locking password; the electronic device uses the locking password to lock the electronic device; and the electronic device sends the locking password to the server. Optionally, the electronic device may encrypt the locking password, and then send the encrypted locking password to the server. During unlocking, the server can generate an unlocking credential based on the locking password.

Manner 2: The electronic device sends indication information to a server, where the indication information is used to instruct the server to generate a locking password; and the electronic device receives the locking password from the server, and uses the locking password to lock the electronic device.

Manner 3: The electronic device generates a first locking password; the electronic device sends indication information to a server, where the indication information is used to instruct the server to generate a second locking password; the electronic device receives the second locking password from the server; the electronic device uses the first locking password and the second locking password to lock the electronic device; and the electronic device sends the first locking password to the server. In this manner, the locking passwords of the electronic device are generated by the electronic device and the server jointly, improving password security.

In a possible implementation, the electronic device includes a hard disk, and in the foregoing three locking manners, the locking the electronic device includes: locking a main board of the electronic device, and locking the hard disk. The locking password includes a main board locking password and a hard disk locking password. The main board locking password is used to lock the main board, and the hard disk locking password is used to lock the hard disk, and the hard disk locking password is stored in the hard disk. Specifically, the hard disk locking password may be stored in a hard disk controller of the hard disk. A manner of locking the hard disk is first controlling the hard disk to power off so that the hard disk exits from a not-locked state; and then controlling the hard disk to power on, and using the hard disk locking password to lock the hard disk. Specifically, once locked, the hard disk can remain in a locked state if powered on or powered off again. The locking password may be numerical, alphabetical, a sequence of symbols, or the like.

Specifically, after the locking is complete, the locking control circuit modifies the state flag to a second state flag, where the second state flag is used to indicate a state that the electronic device needs to be locked and is already locked. In a possible implementation, after the locking is complete, the locking control circuit controls the electronic device to power off, and sends a locking complete message to the server through the low power communication circuit. The low power communication circuit has the same functions as the low power communication circuit described above. Details are not described herein again. Power of the electronic device can be saved by powering off the electronic device after a successful locking.

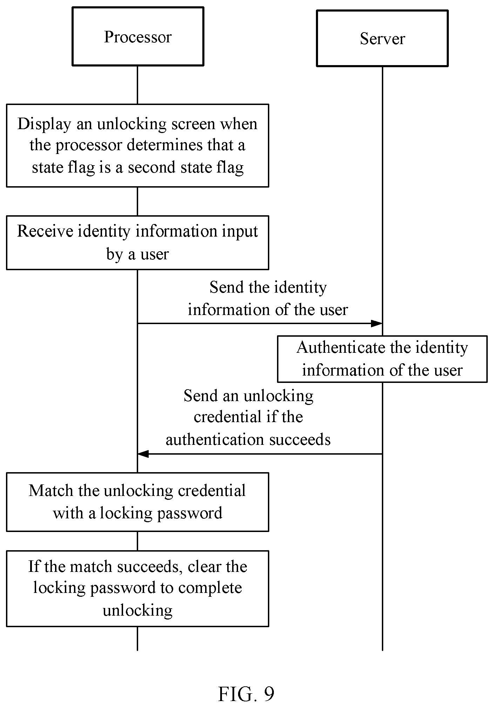

Specifically, after the electronic device is locked, the state flag is modified to the second state flag. The processor determines that the state flag is the second state flag during reading of the state flag in a startup phase of the electronic device restart. When the processor determines that the state flag is the second state flag, the processor pauses the startup and requests user identity authentication. The processor continues the startup after a user identity is authenticated. A manner in which the processor pauses the startup and requests user identity authentication may be: in a startup phase of the electronic device, controlling, by the processor, a display device to display an unlocking screen, where the unlocking screen is used to receive identity information input by the user; and sending, by the processor, the identity information to the server, where the identity information is used by the server to authenticate the user identity. After the user identity is authenticated by the server, the server continues to start the electronic device. FIG. 9 is a flowchart of an unlocking method according to an embodiment of this application.

The following specifically describes an unlocking process. After the user identity is authenticated by the server, the processor can receive an unlocking credential sent from the server, where the unlocking credential is generated based on the locking password after the user identity authentication succeeds; next, the processor matches the unlocking credential with the locking password; and if the match succeeds, the processor clears the locking password to complete unlocking. It should be noted that, after the processor completes the unlocking, the locking control circuit modifies the state flag to a third state flag, where the third state is used to indicate a state that the electronic device does not need to be locked. The processor starts the electronic device normally. That the processor starts the electronic device normally means that the processor normally starts an operating system of the electronic device and all hardware except that already started in the startup phase, and performs initialization processing on software or drivers (such as a sound card driver, a network card driver, and a universal serial bus (universal serial bus, USB) driver) that are set to auto start.

A manner in which the processor matches the unlocking credential with the locking password may be: the processor generates an unlocking password in a preset decryption manner based on the unlocking credential; and the processor determines that the unlocking credential matches the locking password if the unlocking password is the same as the locking password, or determines that the unlocking credential does not match the locking password if the unlocking password is different from the locking password.

Optionally, the processor includes a hard disk, a manner in which the processor matches the unlocking credential with the locking password may be: the processor generates an unlocking password in a preset decryption manner based on the unlocking credential; the processor sends the unlocking password to a hard disk controller; and the hard disk controller generates a credential based on the unlocking password, and determines that the unlocking credential matches the locking password if the credential is the same as a credential pre-stored by the hard disk controller, or determines that the unlocking credential does not match the locking password if the credential is different from the pre-stored credential.

In the locking method shown in FIG. 3, the locking control circuit modifies the state flag to the first state flag when the electronic device needs to be locked, and then controls the electronic device to restart; and in the startup phase of the electronic device, the processor determines, based on the read first state flag, that the device needs to be locked and is not locked, and then performs a locking operation on the electronic device. Because the locking control circuit is capable of running when the electronic device is in a power-off state or a power-on state, locking of the electronic device does not depend on an operating system of the electronic device, so that the electronic device can be securely locked.

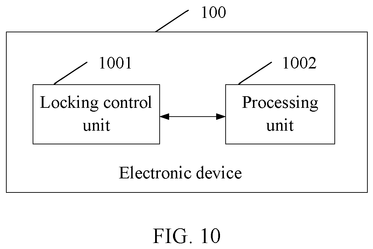

FIG. 10 is a schematic diagram of another electronic device according to an embodiment of this application. The electronic device 100 includes a processor 1002 and a locking control circuit 1001. The locking control circuit 1001 is capable of running when the electronic device is in a power-off state or a power-on state. The following provides a specific description of these two components.

The locking control circuit is configured to perform the following operations:
modifying a state flag to a first state flag when the electronic device needs to be locked, where the state flag is used to indicate a state of the electronic device, and the state includes whether the electronic device needs to be locked and whether the electronic device has already been locked; and the first state flag is used to indicate a state that the electronic device needs to be locked and is not locked; and
controlling the electronic device to restart.

The processor is configured to perform the following operations:
reading the state flag in a startup phase of the electronic device restart; and
locking the electronic device when the state flag is the first state flag.

In a possible implementation, the state flag is stored in a secure element or the locking control circuit. In this manner, a thief is unable to change a locked state of the electronic device by damaging an operating system of the electronic device, improving security of the electronic device.

In a possible implementation, the startup phase is before startup of an operating system of the electronic device. In this manner, a thief is unable to unlock the electronic device by damaging the operating system of the electronic device, improving security of the electronic device.

In a possible implementation, if the electronic device is a computer, the startup phase is a basic input/output system BIOS startup phase; and if the electronic device is a mobile phone, the startup phase is a bootloader phase.

In a possible implementation, the state flag is stored in the locking control circuit, and the processor is further configured to send indication information to the locking control circuit, where the indication information is used to instruct the locking control circuit to send the state flag to the processor; and the locking control circuit is further configured to: perform security authentication on the processor; and send the state flag to the processor when the security authentication succeeds. In this manner, the state flag is stored, read, and modified by the locking control circuit, and security authentication on the processor is added in the reading process, which can prevent the state flag from being parsed or modified maliciously, and improve locking security.

In a possible implementation, the processor is further configured to: receive a locking instruction from a server through a first application; and notify, according to the locking instruction, the locking control circuit to modify the state flag to the first state flag.

In a possible implementation, the electronic device includes a low power communication circuit, and the locking control circuit is further configured to: receive a locking instruction from a server through the low power communication circuit; and modify the state flag to the first state flag. In this manner, when the electronic device is in a power-off state or an offline state, the locking instruction sent from the server can be received through the low power communication circuit, avoiding a problem that the electronic device fails to receive the locking instruction in a power-off state or an offline state. Moreover, with a characteristic of low power consumption, the low power communication circuit does not consume too much power of the electronic device or affect normal use of the electronic device.

In a possible implementation, the locking control circuit is further configured to: modify the state flag to the first state flag when it is detected that the electronic device is being disassembled. In this manner, the electronic device can be locked when a thief is disassembling the electronic device maliciously, preventing a locking failure due to disassembling of the locking control circuit by the thief, and improving security of the electronic device.

In a possible implementation, the locking control circuit is further configured to: modify the state flag to the first state flag when it is detected that a power level of the electronic device falls below a first preset value. In this manner, a problem can be avoided that the electronic device fails to be restarted and locked after a thief uses up power of the electronic device maliciously, improving security of the electronic device.

In a possible implementation, the electronic device includes a low power communication circuit. The low power communication circuit is configured to check, according to a preset cycle, whether the low power communication circuit is normally connected to a server; and the locking control circuit is further configured to: modify the state flag to the first state flag when it is detected that the electronic device fails to connect to the server within a preset time period through the low power communication circuit. In this manner, a problem can be avoided that the electronic device fails to receive a locking instruction after a thief masks a signal from the low power communication circuit of the electronic device, improving security of the electronic device.

In a possible implementation, the processor is specifically configured to: generate a locking password; use the locking password to lock the electronic device; and send the locking password to the server.

In a possible implementation, the processor is specifically configured to: send indication information to the server, where the indication information is used to instruct the server to generate a locking password; and receive the locking password from the server, and use the locking password to lock the electronic device.

In a possible implementation, the processor is specifically configured to: generate a first locking password; send indication information to the server, where the indication information is used to instruct the server to generate a second locking password; receive the second locking password from the server; use the first locking password and the second locking password to lock the electronic device; and send the first locking password to the server. In this manner, the locking passwords of the electronic device are generated by the electronic device and the server jointly, improving password security.

In a possible implementation, the electronic device includes a hard disk, and the processor is further configured to: lock a main board of the electronic device, and lock the hard disk, where the locking password includes a main board locking password and a hard disk locking password, the main board locking password is used to lock the main board, the hard disk locking password is used to lock the hard disk, and the hard disk locking password is stored in the hard disk.

In a possible implementation, the locking control circuit is further configured to: after the locking is complete, modify the state flag to a second state flag, where the second state flag is used to indicate a state that the electronic device needs to be locked and is already locked.

In a possible implementation, the processor is further configured to: when it is determined in the startup phase that the state flag is the second state flag, pause the startup and request user identity authentication, and continue the startup after a user identity is authenticated.

In a possible implementation, the electronic device includes the low power communication circuit, and the locking control circuit is further configured to: after the locking is complete, control the electronic device to power off, and send a locking complete message to the server through the low power communication circuit.

In a possible implementation, the processor is further configured to: receive an unlocking credential sent from the server, where the unlocking credential is generated based on the locking password after the user identity authentication succeeds; match the unlocking credential with the locking password; and if the match succeeds, clear the locking password to complete unlocking.

In a possible implementation, the locking control circuit is further configured to: modify the state flag to a third state flag after the electronic device completes the unlocking, where the third state flag is used to indicate a state that the electronic device does not need to be locked; and the processor is further configured to start the electronic device normally.

In a possible implementation, the locking control circuit is one or more of an embedded controller EC, a microcontroller MCU, a digital signal processor, and a power management integrated circuit PMIC.

In a possible implementation, the low power communication circuit is one or more of a narrow band internet of things NB-IoT circuit, an enhanced machine type communication eMTC circuit, a long range radio LoRa circuit, a Sigfox circuit, a bluetooth low energy BLE circuit, a low power WIFI circuit, and a massive machine type communication mMTC circuit.

In the electronic device, the locking control circuit modifies the state flag to the first state flag when the electronic device needs to be locked, and then controls the electronic device to restart; and in the startup phase of the electronic device, the processor determines, based on the read first state flag, that the device needs to be locked and is not locked, and then performs a locking operation on the electronic device. Because the locking control circuit is capable of running when the electronic device is in a power-off state or a power-on state, locking of the electronic device does not depend on an operating system of the electronic device, so that secure locking can be performed.

In another embodiment of this application, a locking control circuit is provided, where the locking control circuit is configured to perform operations performed by the locking control circuit 1001 in the electronic device shown in FIG. 10.

In another embodiment of this application, a processor is provided, where the processor is configured to perform operations performed by the processor 1002 in the electronic device shown in FIG. 10.

In another embodiment of this application, a computer program product is provided, where when the computer program product is run on a computer, the method according to the embodiment shown in FIG. 3 can be implemented.

In another embodiment of this application, a computer-readable storage medium is provided, where the computer-readable storage medium stores a computer program, and when the computer program is executed by a computer, the method according to the embodiment shown in FIG. 3 is implemented.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A locking method, applied to an electronic device (100), wherein the electronic device (100) comprises a processor (1001, 1002), a low power communication circuit, and a locking control circuit, and the locking control circuit is capable of running when the electronic device (100) is in a power-off state or a power-on state; and the method comprises:
modifying (S301), by the locking control circuit, a state flag to a first state flag when the electronic device (100) needs to be locked, wherein the state flag is used to indicate a state of the electronic device (100), and the state comprises whether the electronic device (100) needs to be locked and whether the electronic device (100) has already been locked; and the first state flag is used to indicate a state that the electronic device (100) needs to be locked and is not locked;
controlling (S302), by the locking control circuit, the electronic device (100) to restart;
reading (S303), by the processor (1001, 1002), the state flag in a startup phase of the electronic device restart; and
locking (S304), by the processor (1001, 1002), the electronic device (100) when the processor (1001, 1002) determines that the state flag is the first state flag,
wherein the modifying, by the locking control circuit, a state flag to a first state flag when the electronic device (100) needs to be locked comprises:
receiving, by the locking control circuit, a locking instruction from a server through the low power communication circuit; and
modifying, by the locking control circuit, the state flag to the first state flag.

2. The method according to claim 1, wherein the startup phase is before startup of an operating system of the electronic device (100).

3. The method according to claim 1 or 2, wherein the state flag is stored in the locking control circuit, and the reading, by the processor (1001, 1002), the state flag in a startup phase of the electronic device restart comprises:
sending, by the processor (1001, 1002), indication information to the locking control circuit, wherein the indication information is used to instruct the locking control circuit to send the state flag to the processor (1001, 1002);
performing, by the locking control circuit, security authentication on the processor (1001, 1002); and
sending, by the locking control circuit, the state flag to the processor (1001, 1002) if the security authentication succeeds.

4. The method according to any one of claims 1 to 3, wherein the modifying, by the locking control circuit, a state flag to a first state flag when the electronic device (100) needs to be locked comprises:
receiving, by the processor (1001, 1002), a locking instruction from a server through a first application; and
notifying, by the processor (1001, 1002) according to the locking instruction, the locking control circuit to modify the state flag to the first state flag.

5. The method according to any one of claims 1 to 3, wherein the modifying, by the locking control circuit, a state flag to a first state flag when the electronic device (100) needs to be locked comprises:
modifying, by the locking control circuit, the state flag to the first state flag when it is detected that the electronic device (100) is being disassembled.

6. The method according to any one of claims 1 to 3, wherein the electronic device (100) comprises a low power communication circuit, and the method further comprises:
checking, by the low power communication circuit according to a preset cycle, whether the low power communication circuit is normally connected to a server; wherein
the modifying, by the locking control circuit, a state flag to a first state flag when the electronic device (100) needs to be locked comprises:
modifying, by the locking control circuit, the state flag to the first state flag when it is detected that the electronic device (100) fails to connect to the server within a preset time period through the low power communication circuit.

7. The method according to any one of claims 1 to 6, wherein the electronic device (100) comprises the low power communication circuit, and the method further comprises:
after the locking is complete, controlling, by the locking control circuit, the electronic device (100) to power off, and sending a locking complete message to the server through the low power communication circuit.

8. An electronic device (100), wherein the electronic device (100) comprises a processor (1001, 1002), a low power communication circuit, and a locking control circuit, and the locking control circuit is capable of running when the electronic device (100) is in a power-off state or a power-on state;
the locking control circuit is configured to perform the following operations:
modifying a state flag to a first state flag when the electronic device (100) needs to be locked, wherein the state flag is used to indicate a state of the electronic device (100), and the state comprises whether the electronic device (100) needs to be locked and whether the electronic device (100) has already been locked; and the first state flag is used to indicate a state that the electronic device (100) needs to be locked and is not locked; and
controlling the electronic device (100) to restart; and
the processor (1001, 1002) is configured to perform the following operations:
reading the state flag in a startup phase of the electronic device restart; and
locking the electronic device (100) when the state flag is the first state flag,
wherein the locking control circuit is further configured to:
receive a locking instruction from a server through the low power communication circuit; and
modify the state flag to the first state flag.

9. The electronic device (100) according to claim 8, wherein the state flag is stored in the locking control circuit, and the processor (1001, 1002) is further configured to send indication information to the locking control circuit, wherein the indication information is used to instruct the locking control circuit to send the state flag to the processor (1001, 1002); and
the locking control circuit is further configured to:
perform security authentication on the processor (1001, 1002); and
send the state flag to the processor (1001, 1002) when the security authentication succeeds.

10. The electronic device (100) according to claim 8 or 9, wherein the processor (1001, 1002) is further configured to:
receive a locking instruction from a server through a first application; and
notify, according to the locking instruction, the locking control circuit to modify the state flag to the first state flag.

11. The electronic device (100) according to claim 8 or 9, wherein the locking control circuit is further configured to:
modify the state flag to the first state flag when it is detected that the electronic device (100) is being disassembled.

12. The electronic device (100) according to claim 8 or 9, wherein the electronic device (100) comprises a low power communication circuit, and the low power communication circuit is configured to check, according to a preset cycle, whether low power communication circuit is normally connected to a server; wherein
the locking control circuit is further configured to:
modify the state flag to the first state flag when it is detected that the electronic device (100) fails to connect to the server within a preset time period through the low power communication circuit.

13. The electronic device (100) according to any one of claims 8 to 12, wherein the electronic device (100) comprises the low power communication circuit, and the locking control circuit is further configured to:
after the locking is complete, control the electronic device (100) to power off, and send a locking complete message to the server through the low power communication circuit.

## Patentansprüche

1. Verriegelungsverfahren, das auf eine elektronische Vorrichtung (100) angewendet wird, wobei die elektronische Vorrichtung (100) einen Prozessor (1001, 1002), eine Kommunikationsschaltung mit geringem Stromverbrauch und eine Verriegelungssteuerschaltung umfasst und die Verriegelungssteuerschaltung in der Lage ist, zu laufen, wenn sich die elektronische Vorrichtung (100) in einem ausgeschalteten oder einem eingeschalteten Zustand befindet; und das Verfahren Folgendes umfasst:
Ändern (S301), durch die Verriegelungssteuerschaltung, eines Zustandsflags in ein erstes Zustandsflag, wenn die elektronische Vorrichtung (100) zu verriegeln ist, wobei das Zustandsflag verwendet wird, um einen Zustand der elektronischen Vorrichtung (100) anzuzeigen, und der Zustand umfasst, ob die elektronische Vorrichtung (100) zu verriegeln ist und ob die elektronische Vorrichtung (100) bereits verriegelt wurde; und das erste Zustandsflag verwendet wird, um einen Zustand anzuzeigen, in dem die elektronische Vorrichtung (100) zu verriegeln ist und nicht verriegelt ist;
Steuern (S302), durch die Verriegelungssteuerschaltung, der elektronischen Vorrichtung (100), neu zu starten;
Lesen (S303), durch den Prozessor (1001, 1002), des Zustandsflags in einer Startphase des Neustarts der elektronischen Vorrichtung; und
Verriegeln (S304), durch den Prozessor (1001, 1002), der elektronischen Vorrichtung (100), wenn der Prozessor (1001, 1002) bestimmt, dass es sich bei dem Zustandsflag um das erste Zustandsflag handelt,
wobei das Ändern, durch die Verriegelungssteuerschaltung, eines Zustandsflags in ein erstes Zustandsflag, wenn die elektronische Vorrichtung (100) zu verriegeln ist, Folgendes umfasst:
Empfangen, durch die Verriegelungssteuerschaltung, einer Verriegelungsanweisung von einem Server über die Kommunikationsschaltung mit geringem Stromverbrauch; und
Ändern, durch die Verriegelungssteuerschaltung, des Zustandsflags in das erste Zustandsflag.

2. Verfahren nach Anspruch 1, wobei die Startphase vor einem Start eines Betriebssystems der elektronischen Vorrichtung (100) liegt.

3. Verfahren nach Anspruch 1 oder 2, wobei das Zustandsflag in der Verriegelungssteuerschaltung gespeichert ist und das Lesen, durch den Prozessor (1001, 1002), des Zustandsflags in einer Startphase des Neustarts der elektronischen Vorrichtung Folgendes umfasst:
Senden, durch den Prozessor (1001, 1002), von Anzeigeinformationen an die Verriegelungssteuerschaltung, wobei die Anzeigeinformationen verwendet werden, um die Verriegelungssteuerschaltung anzuweisen, das Zustandsflag an den Prozessor (1001, 1002) zu senden;
Durchführen, durch die Verriegelungssteuerschaltung, einer Sicherheitsauthentifizierung auf dem Prozessor (1001, 1002); und
Senden, durch die Verriegelungssteuerschaltung, des Zustandsflags an den Prozessor (1001, 1002), wenn die Sicherheitsauthentifizierung erfolgreich war.

4. Verfahren nach einem der Ansprüche 1 bis 3, wobei das Ändern, durch die Verriegelungssteuerschaltung, eines Zustandsflags in ein erstes Zustandsflag, wenn die elektronische Vorrichtung (100) zu verriegeln ist, Folgendes umfasst:
Empfangen, durch den Prozessor (1001, 1002) einer Verriegelungsanweisung von einem Server über eine erste Anwendung; und
Benachrichtigen, durch den Prozessor (1001, 1002) gemäß der Verriegelungsanweisung, der Verriegelungssteuerschaltung, das Zustandsflag in das erste Zustandsflag zu ändern.

5. Verfahren nach einem der Ansprüche 1 bis 3, wobei das Ändern, durch die Verriegelungssteuerschaltung, eines Zustandsflags in ein erstes Zustandsflag, wenn die elektronische Vorrichtung (100) zu verriegeln ist, Folgendes umfasst:
Ändern, durch die Verriegelungssteuerschaltung, des Zustandsflags in das erste Zustandsflag, wenn detektiert wird, dass die elektronische Vorrichtung (100) auseinandergenommen wird.

6. Verfahren nach einem der Ansprüche 1 bis 3, wobei die elektronische Vorrichtung (100) eine Kommunikationsschaltung mit geringem Stromverbrauch umfasst und das Verfahren ferner Folgendes umfasst:
Überprüfen, durch die Kommunikationsschaltung mit geringem Stromverbrauch gemäß einem voreingestellten Zyklus, ob die Kommunikationsschaltung mit geringem Stromverbrauch normal mit einem Server verbunden ist; wobei
das Ändern, durch die Verriegelungssteuerschaltung, eines Zustandsflags in ein erstes Zustandsflag, wenn die elektronische Vorrichtung (100) zu verriegeln ist, Folgendes umfasst:
Ändern, durch die Verriegelungssteuerschaltung, des Zustandsflags in das erste Zustandsflag, wenn detektiert wird, dass die elektronische Vorrichtung (100) innerhalb eines voreingestellten Zeitraums keine Verbindung mit dem Server über die Kommunikationsschaltung mit geringem Stromverbrauch herstellen kann.

7. Verfahren nach einem der Ansprüche 1 bis 6, wobei die elektronische Vorrichtung (100) die Kommunikationsschaltung mit geringem Stromverbrauch umfasst und das Verfahren ferner Folgendes umfasst:
nachdem das Verriegeln abgeschlossen ist, Steuern, durch die Verriegelungssteuerschaltung, der elektronischen Vorrichtung (100), auszuschalten, und Senden einer Verriegelungsabschlussnachricht an den Server über die Kommunikationsschaltung mit geringem Stromverbrauch.

8. Elektronische Vorrichtung (100), wobei die elektronische Vorrichtung (100) einen Prozessor (1001, 1002), eine Kommunikationsschaltung mit geringem Stromverbrauch und eine Verriegelungssteuerschaltung umfasst und die Verriegelungssteuerschaltung in der Lage ist, zu laufen, wenn sich die elektronische Vorrichtung (100) in einem ausgeschalteten oder einem eingeschalteten Zustand befindet;
die Verriegelungssteuerschaltung dazu konfiguriert ist, die folgenden Vorgänge durchzuführen:
Ändern eines Zustandsflags in ein erstes Zustandsflag, wenn die elektronische Vorrichtung (100) zu verriegeln ist, wobei das Zustandsflag verwendet wird, um einen Zustand der elektronischen Vorrichtung (100) anzuzeigen, und der Zustand umfasst, ob die elektronische Vorrichtung (100) zu verriegeln ist und ob die elektronische Vorrichtung (100) bereits verriegelt wurde; und
das erste Zustandsflag verwendet wird, um einen Zustand anzuzeigen, in dem die elektronische Vorrichtung (100) zu verriegeln ist und nicht verriegelt ist; und
Steuern der elektronischen Vorrichtung (100), neu zu starten; und
der Prozessor (1001, 1002) dazu konfiguriert ist, die folgenden Vorgänge durchzuführen:
Lesen des Zustandsflags in einer Startphase des Neustarts der elektronischen Vorrichtung; und
Verriegeln der elektronischen Vorrichtung (100), wenn das Zustandsflag das erste Zustandsflag ist,
wobei die Verriegelungssteuerschaltung ferner zu Folgendem konfiguriert ist:
Empfangen einer Verriegelungsanweisung von einem Server über die Kommunikationsschaltung mit geringem Stromverbrauch; und
Ändern des Zustandsflags in das erste Zustandsflag.

9. Elektronische Vorrichtung (100) nach Anspruch 8, wobei das Zustandsflag in der Verriegelungssteuerschaltung gespeichert ist und der Prozessor (1001, 1002) ferner dazu konfiguriert ist, Anzeigeinformationen an die Verriegelungssteuerschaltung zu senden, wobei die Anzeigeinformationen verwendet werden, um die Verriegelungssteuerschaltung anzuweisen, das Zustandsflag an den Prozessor (1001, 1002) zu senden; und
die Verriegelungssteuerschaltung ferner zu Folgendem konfiguriert ist:
Durchführen einer Sicherheitsauthentifizierung auf dem Prozessor (1001, 1002); und
Senden des Zustandsflags an den Prozessor (1001, 1002), wenn die Sicherheitsauthentifizierung erfolgreich war.

10. Elektronische Vorrichtung (100) nach Anspruch 8 oder 9, wobei der Prozessor (1001, 1002) ferner zu Folgendem konfiguriert ist:
Empfangen einer Verriegelungsanweisung von einem Server über eine erste Anwendung; und
Benachrichtigen, gemäß der Verriegelungsanweisung, der Verriegelungssteuerschaltung, das Zustandsflag in das erste Zustandsflag zu ändern.

11. Elektronische Vorrichtung (100) nach Anspruch 8 oder 9, wobei die Verriegelungssteuerschaltung ferner zu Folgendem konfiguriert ist:
Ändern des Zustandsflags in das erste Zustandsflag, wenn detektiert wird, dass die elektronische Vorrichtung (100) auseinandergenommen wird.

12. Elektronische Vorrichtung (100) nach Anspruch 8 oder 9, wobei die elektronische Vorrichtung (100) eine Kommunikationsschaltung mit geringem Stromverbrauch umfasst und die Kommunikationsschaltung mit geringem Stromverbrauch dazu konfiguriert ist, gemäß einem voreingestellten Zyklus zu prüfen, ob die Kommunikationsschaltung mit geringem Stromverbrauch normal mit einem Server verbunden ist; wobei
die Verriegelungssteuerschaltung ferner zu Folgendem konfiguriert ist:
Ändern, des Zustandsflags in das erste Zustandsflag, wenn detektiert wird, dass die elektronische Vorrichtung (100) innerhalb eines voreingestellten Zeitraums keine Verbindung mit dem Server über die Kommunikationsschaltung mit geringem Stromverbrauch herstellen kann.

13. Elektronische Vorrichtung (100) nach einem der Ansprüche 8 bis 12, wobei die elektronische Vorrichtung (100) die Kommunikationsschaltung mit geringem Stromverbrauch umfasst und die Verriegelungssteuerschaltung ferner zu Folgendem konfiguriert ist:
nachdem das Verriegeln abgeschlossen ist, Steuern der elektronischen Vorrichtung (100), auszuschalten, und Senden einer Verriegelungsabschlussnachricht an den Server über die Kommunikationsschaltung mit geringem Stromverbrauch.

## Revendications

1. Procédé de verrouillage, appliqué à un dispositif électronique (100), dans lequel le dispositif électronique (100) comprend un processeur (1001, 1002), un circuit de communication basse consommation, et un circuit de commande de verrouillage, et le circuit de commande de verrouillage est capable de fonctionner lorsque le dispositif électronique (100) est hors tension ou sous tension ; et le procédé comprend :
la modification (S301), par le circuit de commande de verrouillage, d'un indicateur d'état en un premier indicateur d'état lorsque le dispositif électronique (100) doit être verrouillé, dans lequel l'indicateur d'état est utilisé pour indiquer un état du dispositif électronique (100), et l'état comprend le fait de savoir si le dispositif électronique (100) doit être verrouillé et si le dispositif électronique (100) a déjà été verrouillé ; et le premier indicateur d'état est utilisé pour indiquer un état selon lequel le dispositif électronique (100) doit être verrouillé et n'est pas verrouillé ;
la commande (S302), par le circuit de commande de verrouillage, du redémarrage du dispositif électronique (100) ;
la lecture (S303), par le processeur (1001, 1002), de l'indicateur d'état dans une phase de démarrage du redémarrage du dispositif électronique ; et
le verrouillage (S304), par le processeur (1001, 1002), du dispositif électronique (100) lorsque le processeur (1001, 1002) détermine que l'indicateur d'état est le premier indicateur d'état,
dans lequel la modification, par le circuit de commande de verrouillage, d'un indicateur d'état en un premier indicateur d'état lorsque le dispositif électronique (100) doit être verrouillé comprend :
la réception, par le circuit de commande de verrouillage, d'une instruction de verrouillage provenant d'un serveur via le circuit de communication basse consommation ; et
la modification, par le circuit de commande de verrouillage, de l'indicateur d'état en premier indicateur d'état.

2. Procédé selon la revendication 1, dans lequel la phase de démarrage est antérieure au démarrage d'un système d'exploitation du dispositif électronique (100).

3. Procédé selon la revendication 1 ou 2, dans lequel l'indicateur d'état est stocké dans le circuit de commande de verrouillage, et la lecture, par le processeur (1001, 1002), de l'indicateur d'état lors d'une phase de démarrage du redémarrage du dispositif électronique comprend :
l'envoi, par le processeur (1001, 1002), d'informations d'indication au circuit de commande de verrouillage, dans lequel les informations d'indication sont utilisées pour ordonner au circuit de commande de verrouillage d'envoyer l'indicateur d'état au processeur (1001, 1002) ;
la réalisation, par le circuit de commande de verrouillage, d'une authentification de sécurité sur le processeur (1001, 1002) ; et
l'envoi, par le circuit de commande de verrouillage, de l'indicateur d'état au processeur (1001, 1002) si l'authentification de sécurité réussit.

4. Procédé selon l'une quelconque des revendications 1 à 3, dans lequel la modification, par le circuit de commande de verrouillage, d'un indicateur d'état en un premier indicateur d'état lorsque le dispositif électronique (100) doit être verrouillé comprend :
la réception, par le processeur (1001, 1002), d'une instruction de verrouillage provenant d'un serveur via une première application ; et
la notification, par le processeur (1001, 1002) selon l'instruction de verrouillage, du circuit de commande de verrouillage pour modifier l'indicateur d'état en premier indicateur d'état.

5. Procédé selon l'une quelconque des revendications 1 à 3, dans lequel la modification, par le circuit de commande de verrouillage, d'un indicateur d'état en un premier indicateur d'état lorsque le dispositif électronique (100) doit être verrouillé comprend :
la modification, par le circuit de commande de verrouillage, de l'indicateur d'état en premier indicateur d'état lorsqu'il est détecté que le dispositif électronique (100) est en cours de démontage.

6. Procédé selon l'une quelconque des revendications 1 à 3, dans lequel le dispositif électronique (100) comprend un circuit de communication basse consommation, et le procédé comprend également :
La vérification, par le circuit de communication basse consommation selon un cycle prédéfini, du fait de savoir si le circuit de communication basse consommation est normalement connecté à un serveur ; dans lequel
la modification, par le circuit de commande de verrouillage, d'un indicateur d'état en un premier indicateur d'état lorsque le dispositif électronique (100) doit être verrouillé comprend : la modification, par le circuit de commande de verrouillage, de l'indicateur d'état en premier indicateur d'état lorsqu'il est détecté que le dispositif électronique (100) ne parvient pas à se connecter au serveur dans un délai prédéfini via le circuit de communication basse consommation.

7. Procédé selon l'une quelconque des revendications 1 à 6, dans lequel le dispositif électronique (100) comprend le circuit de communication basse consommation, et le procédé comprend également :
après le verrouillage terminé, la commande, par le circuit de commande de verrouillage, de la mise hors tension du dispositif électronique (100) et l'envoi d'un message de verrouillage terminé au serveur via le circuit de communication basse consommation.

8. Dispositif électronique (100), dans lequel le dispositif électronique (100) comprend un processeur (1001, 1002), un circuit de communication basse consommation, et un circuit de commande de verrouillage, et le circuit de commande de verrouillage est capable de fonctionner lorsque le dispositif électronique (100) est hors tension ou sous tension ;
le circuit de commande de verrouillage est configuré pour réaliser les opérations suivantes :
la modification d'un indicateur d'état en un premier indicateur d'état lorsque le dispositif électronique (100) doit être verrouillé, dans lequel l'indicateur d'état est utilisé pour indiquer un état du dispositif électronique (100), et l'état comprend le fait de savoir si le dispositif électronique (100) doit être verrouillé et si le dispositif électronique (100) a déjà été verrouillé ; et le premier indicateur d'état est utilisé pour indiquer un état selon lequel le dispositif électronique (100) doit être verrouillé et n'est pas verrouillé ; et
la commande du redémarrage du dispositif électronique (100) ; et
le processeur (1001, 1002) est configuré pour réaliser les opérations suivantes :
la lecture de l'indicateur d'état dans une phase de démarrage du redémarrage de l'appareil électronique ; et
le verrouillage du dispositif électronique (100) lorsque l'indicateur d'état est le premier indicateur d'état,
dans lequel le circuit de commande de verrouillage est également configuré pour :
recevoir une instruction de verrouillage d'un serveur via le circuit de communication basse consommation ; et
modifier l'indicateur d'état en premier indicateur d'état.

9. Dispositif électronique (100) selon la revendication 8, dans lequel l'indicateur d'état est stocké dans le circuit de commande de verrouillage, et le processeur (1001, 1002) est également configuré pour envoyer des informations d'indication au circuit de commande de verrouillage, dans lequel les informations d'indication sont utilisées pour ordonner au circuit de commande de verrouillage d'envoyer l'indicateur d'état au processeur (1001, 1002) ; et
le circuit de commande de verrouillage est également configuré pour :
réaliser une authentification de sécurité sur le processeur (1001, 1002) ; et
envoyer l'indicateur d'état au processeur (1001,1002) lorsque l'authentification de sécurité réussit.

10. Dispositif électronique (100) selon la revendication 8 ou 9, dans lequel le processeur (1001, 1002) est également configuré pour :
recevoir une instruction de verrouillage d'un serveur via une première application ; et
notifier, selon l'instruction de verrouillage, le circuit de commande de verrouillage de modifier l'indicateur d'état en premier indicateur d'état.

11. Dispositif électronique (100) selon la revendication 8 ou 9, dans lequel le circuit de commande de verrouillage est également configuré pour :
modifier l'indicateur d'état en premier indicateur d'état lorsqu'il est détecté que le dispositif électronique (100) est en cours de démontage.

12. Dispositif électronique (100) selon la revendication 8 ou 9, dans lequel le dispositif électronique (100) comprend un circuit de communication basse consommation, et le circuit de communication basse consommation est configuré pour vérifier, selon un cycle prédéfini, si le circuit de communication basse consommation est normalement connecté à un serveur ; dans lequel le circuit de commande de verrouillage est également configuré pour :
modifier l'indicateur d'état en premier indicateur d'état lorsqu'il est détecté que le dispositif électronique (100) ne parvient pas à se connecter au serveur dans un délai prédéfini via le circuit de communication basse consommation.

13. Dispositif électronique (100) selon l'une quelconque des revendications 8 à 12, dans lequel le dispositif électronique (100) comprend le circuit de communication basse consommation, et le circuit de commande de verrouillage est également configuré pour :
après le verrouillage terminé, commander la mise hors tension du dispositif électronique (100) et envoyer un message de verrouillage terminé au serveur via le circuit de communication basse consommation.
